# EUROPEAN PATENT APPLICATION

(11) **EP 2 006 569 A2**
(43) Date of publication of application: **24.12.2008**
(21) Application number: 08157073.1
(22) Date of filing: 28.05.2008
(51) Int. Cl.: F16F 9/58

(54) **Damper having a rebound bumper and damper subassembly having same**

(30) Priority: 20.06.2007 US 936549 P
(71) Applicant: Delphi Technologies, Inc., Troy, Michigan 48007 (US)
(72) Inventor: Lun, Saiman, Centerville, OH 45458 (US)
(74) Representative: Denton, Michael John

(57) **Abstract**

A damper (10) includes a rod guide assembly (20) which is attached to an open end portion (28) of a cylinder (12). The rod guide assembly (20) is adapted to guide a piston rod (18) and to seal damping fluid (14) within the cylinder (12). The damper (10) includes a compressible rebound bumper (22) disposed between, and attached to one of, the rod guide assembly (20) and a piston (16). The damper (10) includes a rebound travel limiter (24). In a first expression, the limiter (24) is adapted to limit the compression of the bumper (22) when the limiter (24) is in contact with the rod guide assembly (20) and the piston (16). In a second expression, the limiter (24) is in contact with the bumper (22) and the one of the rod guide assembly (20) and the piston (16), wherein the limiter (24) has a modulus of elasticity which is greater than that of the bumper (22). A damper subassembly is described which includes a compressible rebound bumper (22) and a rebound travel limiter (24).

## Description

### TECHNICAL FIELD

The present invention relates generally to piston dampers, and more particularly to a damper having a rebound bumper and to a damper subassembly having a rebound bumper.

### BACKGROUND OF THE INVENTION

Conventional piston dampers include dampers having a tube and a piston assembly. The tube contains a damping fluid. The piston assembly includes a piston and a piston rod. The piston slideably engages the tube between the closed and open end portions of the tube. The piston rod has a first end portion attached to the damper piston and a second end portion extending outside the open end portion of the tube. A rod guide assembly is attached to the open end portion of the tube to guide the piston rod and to seal the damping fluid within the tube. A rebound bumper is attached (by a snap fit) to the piston-facing end portion of the rod guide assembly and is compressed by the piston when the piston experiences a rebound load and is in a full rebound condition against the rebound bumper. The rebound bumper consists of a monolithic plastic ring having a circular array of spaced-apart and piston-facing raised bumps. For a vehicle suspension damper, the suspension system is designed for a particular rebound length of the damper which is based on an expected maximum rebound-bumper deflection.

Conventional piston dampers include magnetorheological (MR) dampers and non-MR dampers.

What is needed is an improved damper having a rebound bumper and an improved damper subassembly having a rebound bumper.

### SUMMARY OF THE INVENTION

A first expression of an embodiment of the invention is for a damper including a damper cylinder, damping fluid, a damper piston, a piston rod, a rod guide assembly, a compressible rebound bumper, and a rebound travel limiter. The damper cylinder has a closed end portion and an open end portion. The damping fluid is disposed within the damper cylinder. The damper piston is disposed within, and slidingly engagable with, the damper cylinder. The piston rod has a first end portion attached to the damper piston and a second end portion extending outside the open end portion of the damper cylinder. The rod guide assembly is attached to the open end portion of the damper cylinder and is adapted to guide the piston rod and to seal the damping fluid within the damper cylinder. The rebound bumper is disposed between, and is attached to one of, the rod guide assembly and the damper piston. The rebound travel limiter is disposed between the rod guide assembly and the damper piston. The rebound travel limiter is adapted to limit the compression of the rebound bumper when the rebound travel limiter is in contact with the rod guide assembly and the damper piston.

A second expression of an embodiment of the invention is for a damper including a damper cylinder, damping fluid, a damper piston, a piston rod, a rod guide assembly, a compressible rebound bumper, and a rebound travel limiter. The damper cylinder has a closed end portion and an open end portion. The damping fluid is disposed within the damper cylinder. The damper piston is disposed within, and slidingly engagable with, the damper cylinder. The piston rod has a first end portion attached to the damper piston and a second end portion extending outside the open end portion of the damper cylinder. The rod guide assembly is attached to the open end portion of the damper cylinder and is adapted to guide the piston rod and to seal the damping fluid within the damper cylinder. The rebound bumper is disposed between, and is attached to one of, the rod guide assembly and the damper piston. The rebound bumper has a surface portion facing the other of the rod guide assembly and the damper piston, and the rebound bumper has a first modulus of elasticity. The rebound travel limiter is in contact with, the rebound bumper and the one of the rod guide assembly and the damper piston. A portion of the rebound travel limiter is disposed between the rebound bumper and the one of the rod guide assembly and the damper piston. The rebound travel limiter has a surface portion facing the other of the rod guide assembly and the damper piston, and the rebound travel limiter has a second modulus of elasticity which is greater than the first modulus of elasticity. The surface portion of the rebound bumper projects beyond the surface portion of the rebound travel limiter.

A third expression of an embodiment of the invention is for a damper subassembly including an annular, compressible rebound bumper and an annular rebound travel limiter. The rebound bumper has a surface portion, surrounds a bore, and is disposable between, and is attachable to one of, a rod guide assembly of a damper and a damper piston of the damper. The rebound travel limiter has first and second annular portions. The rebound travel limiter is disposable with the first annular portion positioned between, and in contact with, the disposed and attached rebound bumper and the one of the rod guide assembly and the damper piston and with the second annular portion positioned in the bore. The second annular portion has a surface portion. The surface portion of the disposed and attached rebound bumper and the surface portion of the second annular portion of the disposed rebound travel limiter face the other of the rod guide assembly and the damper piston. The surface portion of the disposed and attached rebound bumper projects beyond the surface portion of the second annular portion of the disposed rebound travel limiter.

Several benefits and advantages are derived from one or more of the expressions of the embodiment of the invention. In one example, the rebound bumper is compressed when the damper is in full rebound condition under expected and heavier than expected damper rebound loads which reduces noise and which softens the impact of the damper piston against the rod guide assembly under expected damper rebound loads. In this example, the compression of the rebound bumper is limited to a predetermined maximum compression by the rebound travel limiter when the damper is in full rebound condition under heavier than expected damper rebound loads which protects the rebound bumper from being destroyed and from compression set. Destruction or compression set of the rebound bumper results in an increase in damper rebound length beyond the design length which can damage the suspension system of vehicle employing the damper as a suspension damper.

### SUMMARY OF THE DRAWINGS

Figure 1 is a schematic, cross-sectional view of an embodiment of the invention showing a damper and a damper subassembly which includes a rebound bumper and a rebound travel limiter, wherein the rebound bumper is shown in a relaxed (non-compressed) state;

Figure 2 is a view of a portion of the damper of figure 1 when the damper is in full rebound condition under an expected damper rebound load, wherein the rebound bumper is shown in a partial compressed state;

Figure 3 is a view as in figure 2 but when the damper is in full rebound condition under a heavier than expected damper rebound load, wherein the rebound bumper is shown in a complete but limited compressed state, such limitation being provided by the rebound travel limiter;

Figure 4 is a longitudinal end view of the damper subassembly of figure 1 removed from the damper of figure 1 showing the rebound bumper and showing the second annular portion of the rebound travel limiter disposed in the bore of the rebound bumper;

Figure 5 is a side elevational view of the damper subassembly of figure 4 wherein only the rebound bumper is visible; and

Figure 6 is a side elevational view of the rebound travel limiter of figure 4 removed from the rebound bumper.

### DESCRIPTION OF THE PREFERRED EMBODIMENT

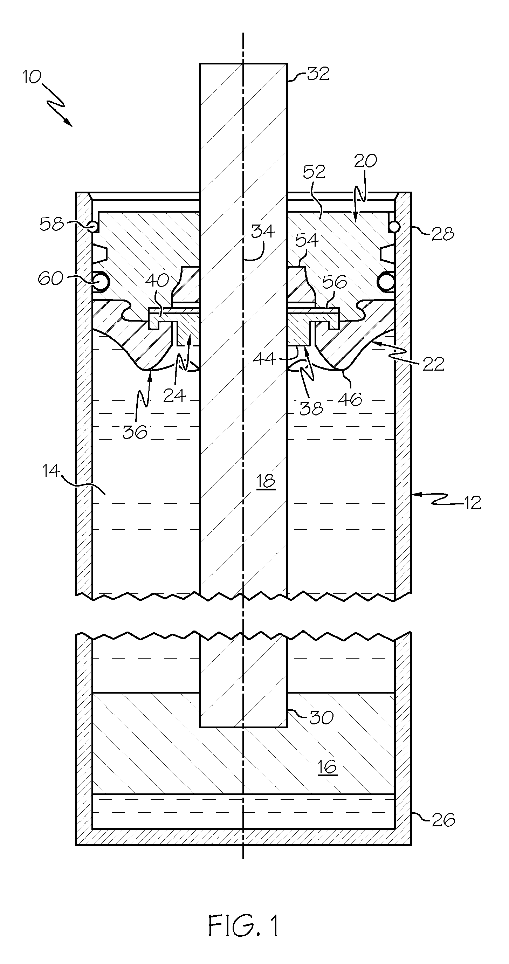

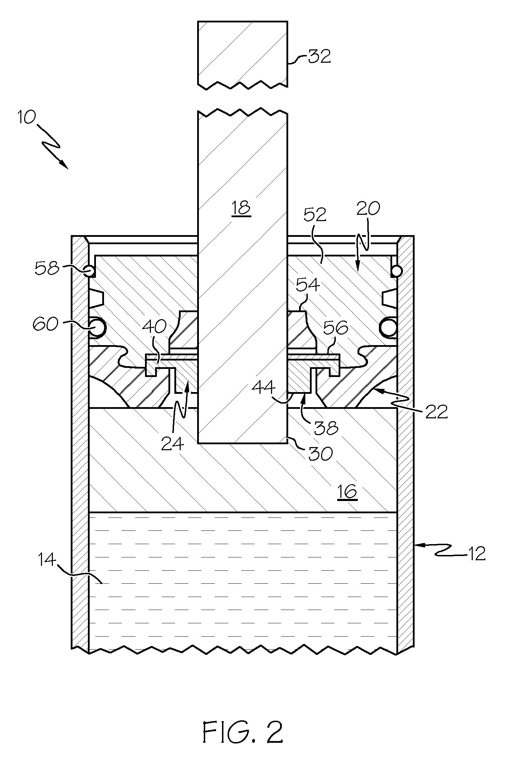

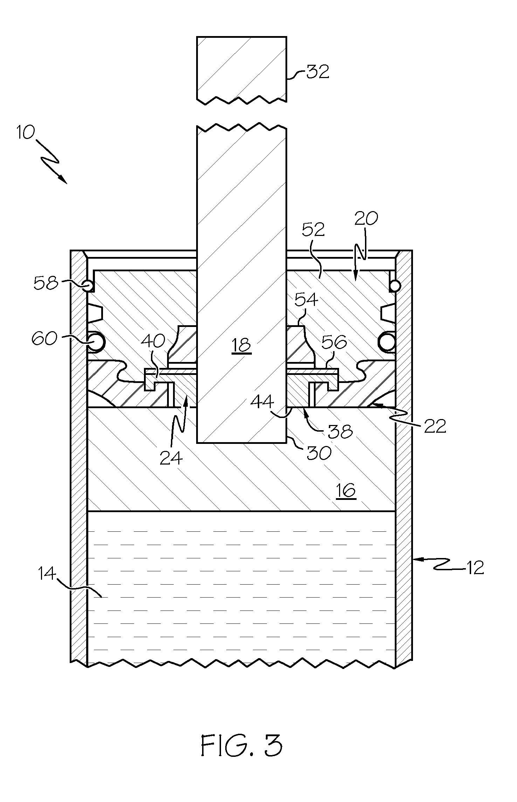

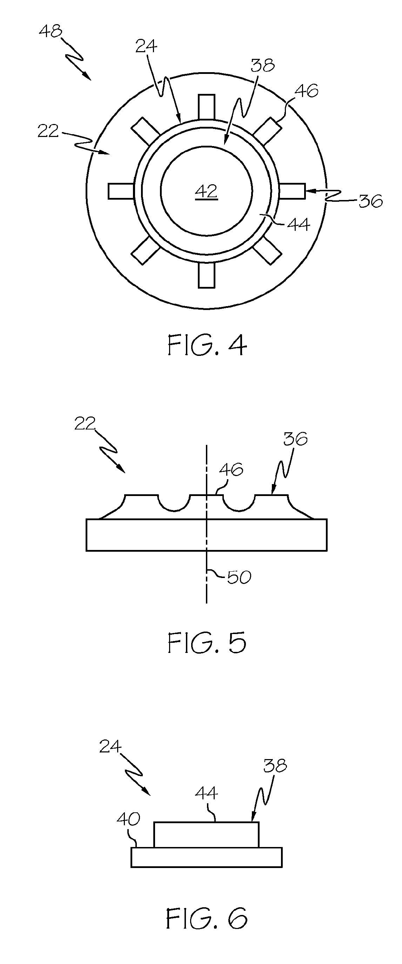

Referring now to the drawings, figures 1-6 show an embodiment of the present invention. A first expression of the embodiment of figures 1-6 is for a damper 10 including a damper cylinder 12, damping fluid 14, a damper piston 16, a piston rod 18, a rod guide assembly 20 (also known as a seal cover assembly), a compressible rebound bumper 22, and a rebound travel limiter 24. The damper cylinder 12 has a (monolithic or non-monolithic) closed end portion 26 and an open end portion 28. The damping fluid 14 is disposed within the damper cylinder 12. The damper piston 16 is disposed within, and slidingly engagable with, the damper cylinder 12. The piston rod 18 has a first end portion 30 attached to the damper piston 16 and a second end portion 32 extending outside the open end portion 28 of the damper cylinder 12. The rod guide assembly 20 is attached to the open end portion 28 of the damper cylinder 12 and is adapted to guide the piston rod 18 and to seal the damping fluid 14 within the damper cylinder 12. The rebound bumper 22 is disposed between, and is attached to one of, the rod guide assembly 20 and the damper piston 16. The rebound travel limiter 24 is disposed between the rod guide assembly 20 and the damper piston 16. The rod guide assembly 20 is adapted to limit the compression of the rebound bumper 22 when the rebound travel limiter 24 is in contact with the rod guide assembly 20 and the damper piston 16.

In one arrangement of the first expression of the embodiment of figures 1-6, the rebound travel limiter 24 is in contact with the rebound bumper 22 and the one of the rod guide assembly 20 and the damper piston 16, and a portion of the rebound travel limiter 24 is disposed between the rebound bumper 22 and the one of the rod guide assembly 20 and the damper piston 16. In one variation, the rebound bumper 22 is attached to the rod guide assembly 20. Other arrangements and variations, not shown, include, without limitation: 1) the rebound bumper attached to the damper piston; 2) the rebound bumper attached to one of the rod guide assembly and the damper piston, and the rebound travel limiter attached to the other of the rod guide assembly and the damper piston; and 3) the rebound bumper and the rebound travel limiter each attached to the same one of the rod guide assembly and the damper piston with or without the rebound bumper and the rebound travel limiter contacting each other.

In one enablement of the first expression of the embodiment of figures 1-6, the damper cylinder 12 has a central longitudinal axis 34, and the rebound bumper 22 is annular and is substantially coaxially aligned with the longitudinal axis 34. In one variation, the rebound travel limiter 24 is annular and is substantially coaxially aligned with the longitudinal axis 34. Other shapes, not shown, of the rebound bumper and the rebound travel limiter include, without limitation, a plurality of adjacent tall (for the rebound bumpers) and short (for the rebound travel limiters) solid cylinders, etc. In one choice of materials, the rebound bumper 22 consists essentially of plastic, and the rebound travel limiter 24 consists essentially of metal. Other choices of materials include, without limitation, a stiffer plastic for the rebound travel limiter than the plastic for the rebound bumper, etc.

A second expression for the embodiment of figures 1-6 is for a damper 10 including a damper cylinder 12, damping fluid 14, a damper piston 16, a piston rod 18, a rod guide assembly 20 (also known as a seal cover assembly), a compressible rebound bumper 22, and a rebound travel limiter 24. The damper cylinder 12 has a (monolithic or non-monolithic) closed end portion 26 and an open end portion 28. The damping fluid 14 is disposed within the damper cylinder 12. The damper piston 16 is disposed within, and slidingly engagable with, the damper cylinder 12. The piston rod 18 has a first end portion 30 attached to the damper piston 16 and a second end portion 32 extending outside the open end portion 28 of the damper cylinder 12. The rod guide assembly 20 is attached to the open end portion 28 of the damper cylinder 12 and is adapted to guide the piston rod 18 and to seal the damping fluid 14 within the damper cylinder 12. The rebound bumper 22 is disposed between, and is attached to one of, the rod guide assembly 20 and the damper piston 16. The rebound bumper 22 has a surface portion 36 facing the other of the rod guide assembly 20 and the damper piston 16, and the rebound bumper 22 has a first modulus of elasticity. The rebound travel limiter 24 is in contact with the rebound bumper 22 and the one of the rod guide assembly 20 and the damper piston 16. A portion of the rebound travel limiter 24 is disposed between the rebound bumper 22 and the one of the rod guide assembly 20 and the damper piston 16. The rebound travel limiter 24 has a surface portion 38 facing the other of the rod guide assembly 20 and the damper piston 16, and the rebound travel limiter 24 has a second modulus of elasticity which is greater than the first modulus of elasticity. The surface portion 36 of the rebound bumper 22 projects beyond the surface portion 38 of the rebound travel limiter 24.

It is noted that describing a surface portion as "facing" a component does not require the surface portion to be flat and facing the component. For example, and without limitation, a hemispherical surface portion projecting substantially toward a component is considered to be facing the component, a pyramidal surface portion projecting substantially toward a component is considered to be facing the component, etc.

In one implementation of the second expression of the embodiment of figures 1-6, the second modulus of elasticity is at least one hundred times greater than the first modulus of elasticity. In one variation, the damper cylinder 12 has a central longitudinal axis 34, and the rebound bumper 22 and the rebound travel limiter 24 are annular and substantially coaxially aligned with the longitudinal axis 34. In one modification, the rebound travel limiter 24 has a first annular portion 40 disposed between, and in contact with, the rebound bumper 22 and the one of the rod guide assembly 20 and the damper piston 16. In a first example, the rebound bumper 22 surrounds a bore 42, the rebound travel limiter 24 has a second annular portion 44 disposed in the bore 42, and the second annular portion 44 includes the surface portion 38 of the rebound travel limiter 24.

In one realization of the first example, the rebound bumper 22 has a snap-fit attachment to the one of the rod guide assembly 20 and the damper piston 16. In the same or a different realization, the rebound bumper 22 is attached to the damper piston 16. In the same or a different realization, the rebound bumper 22 consists essentially of plastic, and the rebound travel limiter 24 consists essentially of metal. In the same or a different realization, the surface portion 36 of the rebound bumper 22 has a circular array of spaced-apart raised bumps 46.

A third expression for the embodiment of figures 1-6 is for a damper subassembly 48 including an annular, compressible rebound bumper 22 and an annular rebound travel limiter 24. The rebound bumper 22 has a surface portion 36, surrounds a bore 42, and is disposable between, and is attachable to one of, a rod guide assembly 20 of a damper 10 and a damper piston 16 of the damper 10. The rebound travel limiter 24 has first and second annular portions 40 and 44. The rebound travel limiter 24 is disposable with the first annular portion 40 positioned between, and in contact with, the disposed and attached rebound bumper 22 and the one of the rod guide assembly 20 and the damper piston 16 and with the second annular portion 44 positioned in the bore 42. The second annular portion 44 has a surface portion 38. The surface portion 36 of the disposed and attached rebound bumper 22 and the surface portion 38 of the second annular portion 44 of the disposed rebound travel limiter 24 face the other of the rod guide assembly 20 and the damper piston 16. The surface portion 36 of the disposed and attached rebound bumper 22 projects beyond the surface portion 38 of the second annular portion 44 of the disposed rebound travel limiter 24.

In one implementation of the third expression of the embodiment of figures 1-6, the rebound bumper 22 has a first modulus of elasticity, the rebound travel limiter 24 has a second modulus of elasticity, and the second modulus of elasticity is at least one hundred times greater than the first modulus of elasticity. In the same or a different implementation, the rebound bumper 22 has a central longitudinal axis 50, and the first and second annular portions 40 and 44 of the disposed rebound travel limiter 24 are substantially coaxially aligned with the longitudinal axis 50. In the same or a different implementation, the rebound bumper 22 is attachable to the damper piston 16. In one variation, the rebound bumper 22 is attached to the damper piston 16.

In one construction of any one or more or all of the expressions of the embodiment of figures 1-6, the rod guide assembly 20 includes a rod guide body 52, a seal 54, and a retaining washer 56 which retains the seal 54 in the rod guide body 52. In one variation, a snap ring 58 secures the rod guide body 52 to the damper cylinder 12. In one modification, the rebound travel limiter 24 abuts the retaining washer 56 of the rod guide assembly 20, and the rebound bumper 22 has a snap-fit attachment to the rod guide body 52. In one example, an "O"-ring seal 60 is disposed between the rod guide body 52 and the damper cylinder 12. In one illustration, the damper 10 is a magnetorheological (MR) damper. In a different illustration, the damper 10 is a non-MR damper. In one example, not shown, the damper piston includes a piston core and includes a piston ring disposed outward of the piston core to define a through passageway between the piston core and the piston ring. Other examples of damper pistons, including damper pistons having piston seals, are left to those skilled in the art.

Several benefits and advantages are derived from one or more of the expressions of the embodiment of the invention. In one example, the rebound bumper is compressed when the damper is in full rebound condition under expected and heavier than expected damper rebound loads which reduces noise and which softens the impact of the damper piston against the rod guide assembly under expected damper rebound loads. In this example, the compression of the rebound bumper is limited to a predetermined maximum compression by the rebound travel limiter when the damper is in full rebound condition under heavier than expected damper rebound loads which protects the rebound bumper from being destroyed and from compression set. Destruction or compression set of the rebound bumper results in an increase in damper rebound length beyond the design length which can damage the suspension system of vehicle employing the damper as a suspension damper.

The foregoing description of several expressions of an embodiment of the invention has been presented for purposes of illustration. It is not intended to be exhaustive or to limit the invention to the precise form disclosed, and obviously many modifications and variations are possible in light of the above teaching. It is intended that the scope of the invention be defined by the claims appended hereto.

## Claims

1. A damper (10) comprising:
a) a damper cylinder (12) having a closed end portion (26) and an open end portion (28);
b) damping fluid (14) disposed within the damper cylinder (12);
c) a damper piston (16) disposed within, and slidingly engagable with, the damper cylinder (12);
d) a piston rod (18) having a first end portion (30) attached to the damper piston (16) and a second end portion (32) extending outside the open end portion (28) of the damper cylinder (12);
e) a rod guide assembly (20) attached to the open end portion (28) of the damper cylinder (12) and adapted to guide the piston rod (18) and to seal the damping fluid (14) within the damper cylinder (12);
f) a compressible rebound bumper (22) disposed between, and attached to one of, the rod guide assembly (20) and the damper piston (16); and
g) a rebound travel limiter (24) disposed between the rod guide assembly (20) and the damper piston (16) and adapted to limit the compression of the rebound bumper (22) when the rebound travel limiter (24) is in contact with the rod guide assembly (20) and the damper piston (16).

2. The damper (10) of claim 1, wherein the rebound travel limiter (24) is in contact with the rebound bumper (22) and the one of the rod guide assembly (20) and the damper piston (16), and wherein a portion of the rebound travel limiter (24) is disposed between the rebound bumper (22) and the one of the rod guide assembly (20) and the damper piston (16).

3. The damper (10) of claim 2, wherein the rebound bumper (22) is attached to the rod guide assembly (20).

4. The damper (10) of claim 1, wherein the damper cylinder (12) has a central longitudinal axis (34) and wherein the rebound bumper (22) is annular and substantially coaxially aligned with the longitudinal axis (34).

5. The damper (10) of claim 4, wherein the rebound travel limiter (24) is annular and substantially coaxially aligned with the longitudinal axis (34).

6. The damper (10) of claim 5, wherein the rebound bumper (22) consists essentially of plastic and the rebound travel limiter (24) consists essentially of metal.

7. A damper (10) comprising:
a) a damper cylinder (12) having a closed end portion (26) and an open end portion (28);
b) damping fluid (14) disposed within the damper cylinder (12);
c) a damper piston (16) disposed within, and slidingly engagable with, the damper cylinder (12);
d) a piston rod (18) having a first end portion (30) attached to the damper piston (16) and a second end portion (32) extending outside the open end portion (28) of the damper cylinder (12);
e) a rod guide assembly (20) attached to the open end portion (28) of the damper cylinder (12) and adapted to guide the piston rod (18) and to seal the damping fluid (14) within the damper cylinder (12);
f) a compressible rebound bumper (22) disposed between, and attached to one of, the rod guide assembly (20) and the damper piston (16), wherein the rebound bumper (22) has a surface portion (36) facing the other of the rod guide assembly (20) and the damper piston (16) and wherein the rebound bumper (22) has a first modulus of elasticity; and
g) a rebound travel limiter (24) in contact with the rebound bumper (22) and the one of the rod guide assembly (20) and the damper piston (16), wherein a portion of the rebound travel limiter (24) is disposed between the rebound bumper (22) and the one of the rod guide assembly (20) and the damper piston (16), wherein the rebound travel limiter (24) has a surface portion (38) facing the other of the rod guide assembly (20) and the damper piston (16), wherein the rebound travel limiter (24) has a second modulus of elasticity which is greater than the first modulus of elasticity, and wherein the surface portion (36) of the rebound bumper (22) projects beyond the surface portion (38) of the rebound travel limiter (24).

8. The damper (10) of claim 7, wherein the second modulus of elasticity is at least one hundred times greater than the first modulus of elasticity.

9. The damper (10) of claim 8, wherein the damper cylinder (12) has a central longitudinal axis (34) and wherein the rebound bumper (22) and the rebound travel limiter (24) are annular and substantially coaxially aligned with the longitudinal axis (34).

10. The damper (10) of claim 9, wherein the rebound travel limiter (24) has a first annular portion (40) disposed between, and in contact with, the rebound bumper (22) and the one of the rod guide assembly (20) and the damper piston (16).

11. The damper (10) of claim 10, wherein the rebound bumper (22) surrounds a bore (42), wherein the rebound travel limiter (24) has a second annular portion (44) disposed in the bore (42), and wherein the second annular portion (44) includes the surface portion (38) of the rebound travel limiter (24).

12. The damper (10) of claim 11, wherein the rebound bumper (22) has a snap-fit attachment to the one of the rod guide assembly (20) and the damper piston (16).

13. The damper (10) of claim 11, wherein the rebound bumper (22) is attached to the damper piston (16).

14. The damper (10) of claim 11, wherein the rebound bumper (22) consists essentially of plastic and the rebound travel limiter (24) consists essentially of metal.

15. The damper (10) of claim 11, wherein the surface portion (36) of the rebound bumper (22) has a circular array of spaced-apart raised bumps (46).

16. A damper subassembly (48) comprising:
a) an annular, compressible rebound bumper (22) having a surface portion (36), surrounding a bore (42), and disposable between, and attachable to one of, a rod guide assembly (20) of a damper (10) and a damper piston (16) of the damper (10); and
b) an annular rebound travel limiter (24) having first and second annular portions (40 and 44), wherein the rebound travel limiter (24) is disposable with the first annular portion (40) positioned between, and in contact with, the disposed and attached rebound bumper (22) and the one of the rod guide assembly (20) and the damper piston (16) and with the second annular portion (44) positioned in the bore (42), wherein the second annular portion (44) has a surface portion (38), wherein the surface portion (36) of the disposed and attached rebound bumper (22) and the surface portion (38) of the second annular portion (44) of the disposed rebound travel limiter (24) face the other of the rod guide assembly (20) and the damper piston (16), and wherein the surface portion (36) of the disposed and attached rebound bumper (22) projects beyond the surface portion (38) of the second annular portion (44) of the disposed rebound travel limiter (24).

17. The damper subassembly (48) of claim 16, wherein the rebound bumper (22) has a first modulus of elasticity and the rebound travel limiter (24) has a second modulus of elasticity, and wherein the second modulus of elasticity is at least one hundred times greater than the first modulus of elasticity.

18. The damper subassembly (48) of claim 16, wherein the rebound bumper (22) has a central longitudinal axis (34) and wherein the first and second annular portions (40 and 44) of the disposed rebound travel limiter (24) are substantially coaxially aligned with the longitudinal axis (34).

19. The damper subassembly (48) of claim 16, wherein the rebound bumper (22) is attachable to the damper piston (16).

20. The damper subassembly (48) of claim 19, wherein the rebound bumper (22) is attached to the damper piston (16).
